# EUROPEAN PATENT SPECIFICATION

(11) **EP 3 273 262 B1**
(45) Date of publication and mention of the grant of the patent: **08.05.2019**
(21) Application number: 16001618.4
(22) Date of filing: 23.07.2016
(51) Int. Cl.: G01S 7/40, G01S 13/78, G01S 13/87, G01S 13/44

(54) **MONOPULSE SECONDARY SURVEILLANCE RADAR**
SEKUNDÄRER MONOPULS-ÜBERWACHUNGSRADAR
RADAR SECONDAIRE DE SURVEILLANCE MONOPULSE

(43) Date of publication of application: 24.01.2018
(73) Proprietor: HENSOLDT Sensors GmbH, 82024 Taufkirchen (DE)
(72) Inventor: Graf, Carl Jean Paul, 89231 Neu-Ulm (DE)
(74) Representative: LifeTech IP Spies & Behrndt Patentanwälte PartG mbB

(56) References cited:
- EP-A1- 2 930 531
- FR-A1- 2 934 688
- US-A- 5 198 823
- US-A- 6 094 169
- US-A1- 2010 156 698
- FRANCOIS DELILLE ET AL: "Advanced solutions for integrated surveillance", INTEGRATED COMMUNICATIONS NAVIGATION AND SURVEILLANCE CONFERENCE (ICNS), 2010, IEEE, PISCATAWAY, NJ, USA, 11 May 2010 (2010-05-11), pages 1-16, XP032267731, DOI: 10.1109/ICNSURV.2010.5503342 ISBN: 978-1-4244-7457-8

## Description

The invention relates to a Monopulse Secondary Surveillance Radar (MSSR) with dual redundant architecture according to the preamble of claim 1.

A secondary surveillance radar (SSR) is a special type of radar system that is typically used for air traffic control (ATC). Unlike primary radar systems (PSR) that measure only the range and bearing of targets by detecting reflected radio signals, SSR relies on targets equipped with a transponder that reply to each interrogation signal of the SSR by transmitting a response containing encoded data.

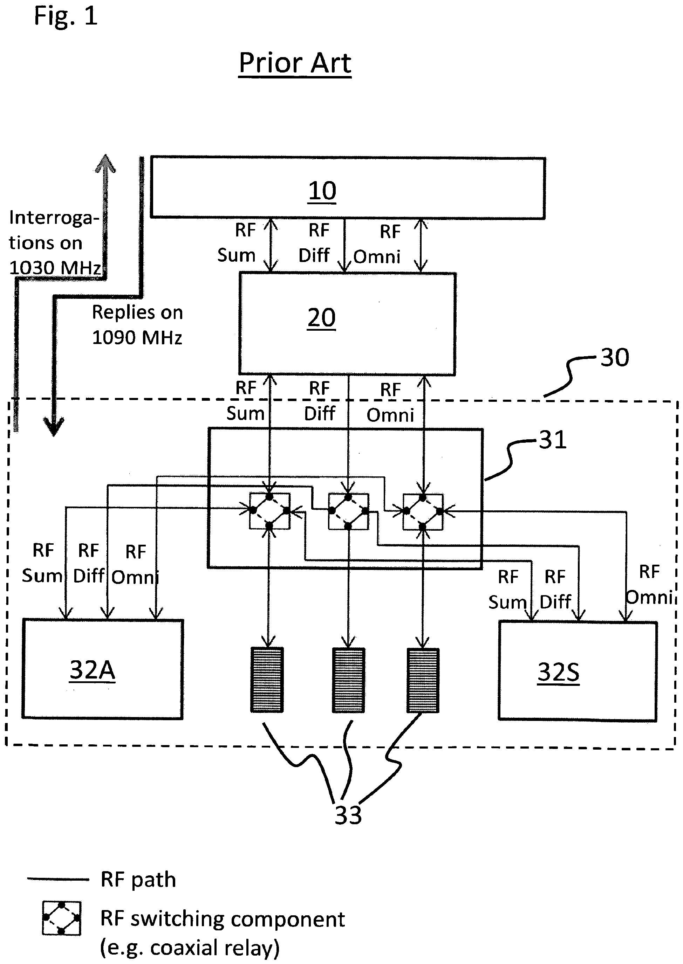

State of the art civil or military secondary surveillance radars apply a monopulse technique and have a dual redundant architecture (as displayed in Fig. 1). A secondary dual redundant interrogator 30 is connected to a secondary monopulse rotating antenna 10 through three RF (radio frequency) paths: sum, difference and omni (also called control or SLS). The secondary dual redundant interrogator 30 comprises an active and a stand-by TR/RX channel 32A, 32S of identical design, each TR/RX channel comprising a transmitter and a receiver as their main components. Via the changeover equipment 20 the antenna 10 can be switchably connected to either the active TR/RX channel or the stand-by TR/RX channel. In Fig. 1 the antenna 10 is connected via the changeover equipment 20 to the TR/RX channel 32A (on the left) making it the active TR/RX channel. Accordingly, TR/RX channel designated 32S acts as the stand-by TR/RX channel which is currently not connected to rotating antenna 10. The changeover between active or stand-by status of a particular TR/RX channel can be triggered either by local or remote operator commands or automatically by the faulty status of the currently active TR/RX channel. Interrogation signals are transmitted by the active TR/RX channel 32A over the sum and omni RF paths. The corresponding replies are received over the same three RF paths sum, diff, omni. The stand-by TR/RX channel is idle and does not perform any task related to the active reception of aircraft replies. Via changeover equipment it is connected to three RF dummy loads 33.

Beside the active interrogation of targets, some advanced secondary surveillance radars are also capable to receive and process unsolicited squittered transmissions from aviation radio systems like ADS-B (Automatic Dependent Surveillance Broadcast) transponders. This refers to a periodic burst or broadcast of aircraft data that are transmitted periodically by a transponder (e.g. a mode S transponder) without interrogation. Such unsolicited transmissions are also called spontaneous transmissions as opposed to transmissions triggered by an interrogation of a MSSR. Examples of such unsolicited squitter transmissions are ADS-B Mode S 1090MHz extended squitters, IFF Mode 5 level 2 squittered reports and UAT (Universal Access Transceiver) ADS-B messages that are received through the rotating antenna of the MSSR.

As an example, the ADS-B Mode S 1090 MHz extended squitter contains all information necessary for the ground controller and other aircraft to track each airplane's flight path with enhanced precision and accuracy, as beside aircraft identification, system status and pressure altitude information, additional information like aircraft position, direction of flight, aircraft velocity, vertical climb/descent are transmitted. The UAT ADS-B messages contain the same basic data transmission data as the extended squitters, however these messages are sent out on a different frequency namely 978 MHz.

However, some of these unsolicited squitter transmissions are missed out due to the rotation of the antenna and the three dissimilar antenna diagrams (sum, diff, omni), causing a disruption in the regular information update rate and a non-constant maximum reception range depending strongly upon the current antenna pointing azimuth.

FR 2 930 531 A1 und FR 2 934 688 A1 disclose further conventional radar surveillance systems, wherein errors in the determination are taken into account.

### Summary of the invention

The object of the invention is to provide a Monopulse Secondary Surveillance Radar with dual redundant architecture that does not miss out unsolicited squitter transmissions independent of the azimuth position of the rotating antenna.

This object is achieved by the Monopulse Secondary Surveillance Radar according to claim 1. Advantageous embodiments of the invention and methods to operate the

Monopulse Secondary Surveillance Radar according to the invention are the object of additional claims.

According to the invention the monopulse secondary surveillance radar comprises:
- a rotating antenna for transmitting interrogations, receiving replies from external transponders,
- a dual redundant interrogator with two parallel TR/RX channels, each TR/RX channel comprising a transmitter and a receiver,
- changeover equipment, the status of which defines which one of the two TR/RX channels acts as the active or as the stand-by TR/RX channel by connecting the rotating antenna to the active TR/RX channel.

According to the invention the monopulse secondary surveillance radar further comprises a plurality of fixed sectorised antennas that together are capable to cover the complete azimuth. The stand-by TR/RX channel can be switchably connected to the fixed sectorised antennas and the stand-by TR/RX channel is capable to receive and process unsolicited squittered transmissions sent by aviation radio systems (e.g. aircraft-based transponders like ADS-B transponders) received via the fixed sectorised antennas.

As a result, the previously inactive stand-by TR/RX channel can now be used for the reception of additional aircraft-tracking information transmitted spontaneously by aircraft-based transponders without interrogation. In particular, the update rate of such additional information is not depending upon the azimuth anymore.

According to one preferred embodiment of the invention three fixed sectorised antennas are used, each mounted 120° apart from each other, together covering the complete azimuth of 360 degrees. The fixed sectorised antennas can be mounted at the antenna tower where the rotating antenna is already installed.

In a preferable embodiment of the inventive MSSR, the stand-by TR/RX channel is capable to receive and process at least one of the following types of unsolicited squittered transmissions: ADS-B Mode S 1090 MHz extended squitters, IFF Mode 5 Level 2 squittered reports, UAT ADS-B messages (e.g. sent on 978 MHz - UAT is currently not mandated in Europe but recommended in the USA for aircraft flying under 18000 feet) via the fixed sectorised antennas.

As the MSSR architecture is dual redundant, both TR/RX channels provide the same capabilities so that the TR/RX channel which is not used for the interrogations is defined as the stand-by TR/RX channel and thus switched to the fixed sectorised antennas for the reception of the unsolicited squittered transmissions. The other TR/RX channel, i.e. the active TR/RX channel, is switched to the rotating monopulse antenna and used for active interrogation, i.e. transmitting the interrogations and receiving and processing the corresponding replies from external transponders via the rotating monopulse antenna.

The secondary dual redundant interrogator stand-by TR/RX channel can now deliver useful information based on the content of the above mentioned transmissions sent spontaneously by an aircraft. All these types of transmissions contain the position of the aircraft in terms of WGS84 latitude, longitude (derived from GNSS) and barometric altitude or GNSS (Global Navigation Satellite System) altitude. All these reports are extremely useful in the sense that they provide the air traffic controller with situational awareness in addition to the "normal" plots generated by means of interrogation/reply cycles of the MSSR.
For example the ADS-B Mode S 1090 MHz extended squitter/UAT ADS-B messages contain all necessary information to track each airplane's flight path with enhanced precision and accuracy, as beside aircraft identification, system status and pressure altitude information additional aircraft position, direction of flight, aircraft velocity, vertical climb/descent are transmitted.

In a preferred example of the invention, each RF path connecting a fixed sectorised antenna with the stand-by TR/RX channel may comprise a low noise amplifier. In this way, the maximum reception range can be further increased. According to an advantageous embodiment of the invention, such low noise amplifier may be integrated in a sectorised antenna.

The Low Noise Amplifiers may be powered by the stand-by TR/RX channel and/or the active TR/RX channel of the secondary dual redundant interrogator.

The MSSR according to the invention can be used in various ways and provides new and advantageous functionalities. Specifically, the invention allows azimuth and slant range alignment of the active TR/RX channel, which is especially useful when an FFM (Far Field Monitor) is not available, which may be the case in particular for mobile or transportable systems.

According to a first variant of such use, Mode S plots are generated by the active TR/RX channel and ADS-B Mode S 1090MHz extended squitters resulting data or UAT ADS-B message resulting data are generated by the stand-by TR/RX channel. The data sets generated by each of the two respective channels are then correlated in order to evaluate the azimuth bias of the active TR/RX channel and to align the active TR/RX channel to the geographic north.
A mode S plot is the result of the processing of a least one Mode S reply sent by a Mode S transponder within the beam of the rotating antenna. In case of several replies (with at least one of them containing Mode S information) sent by the Mode S transponder within the beam, these replies are correlated and form a Mode S plot. The term "ADS-B Mode S 1090MHz extended squitter resulting data" means the information derived by the stand-by TR/RX channel 32S from the original ADS-B Mode S 1090MHz extended squitters that were received via the fixed sectorised antennas 40. Likewise, "UAT ADS-B message resulting data" means the information derived by the stand-by TR/RX channel 32S from the original UAT ADS-B messages that were received via the fixed sectorised antennas 40.

According to a second variant of such use of the MSSR, Mode S plots are generated by the active TR/RX channel and ADS-B Mode S 1090MHz extended squitter resulting data or alternatively UAT ADS-B message resulting data are generated by the stand-by TR/RX channel. Said signals are then correlated in order to evaluate the slant range bias of the active TR/RX channel and to align in range the active TR/RX channel.

If a collocated PSR (Primary Surveillance Radar) radar is present, a similar alignment in azimuth with respect to the PSR can be performed as follows:
- generating primary plots by the primary surveillance radar collocated to the monopulse secondary surveillance radar;
- generating ADS-B Mode S 1090MHz extended squitters resulting data or UAT ADS-B message resulting data or IFF Mode 5 level 2 report resulting data by the stand-by TR/RX channel;
- correlating said signals in order to evaluate the azimuth bias of the primary surveillance radar and to align the primary surveillance radar to the geographic north.

The term "collocated" means that the antennas of PSR and MSSR are mounted on the same pedestal or turning gear rotating about the same axis.
The term "IFF Mode 5 level 2 report resulting data" means the information derived by the stand-by TR/RX channel 32S from the original IFF Mode 5 level 2 reports that were received via the sectorised antennas 40.

According to a further variant, the slant range bias and/or the azimuth bias of the active TR/RX channel can be evaluated on a permanent basis and a warning message is issued if the slant range bias and/or the azimuth bias of the active TR/RX channel exceed a predefined threshold.

With respect to the PSR, in another variant the slant range bias and/or the azimuth bias of the PSR are evaluated on a permanent basis and a warning message is issued if the slant range bias and/or the azimuth bias of the PSR exceeds a predefined threshold.

With the invention, the previously inactive stand-by TR/RX channel can now be used for the continuous reception of unsolicited squittered transmissions sent by external transponders. As a result, the reception and update of such information is not depending anymore on the azimuth of the rotating antenna of the MSSR. In addition, since the fixed sectorised antennas have similar antenna diagrams, the maximum reception range of the MSSR is optimized. By the introduction of low noise amplifiers to each RF path of the sectorised antenna such maxiumum reception range can be further improved.

For the installation of the fixed sectorised antennas the existing mechanical infrastructure of known MSSRs (i.e. on a radar tower) and corresponding RF feeders can be used. Therefore, an update or retrofit of existing MSSR systems can easily be achieved. In addition, as the MSSR is already able to receive and process unsolicited squittered transmissions, a separate ADS-B receiver is not necessary.

A particular benefit of the invention is the fact that the additional information received and processed by the stand-by TR/RX channel can be used for alignment of the active TR/RX channel in azimuth to the geographical north and in range. Therefore, costly dedicated calibration flights are not necessary.

Similarly, if the MSSR is used in combination with a PSR, the collocated PSR may be aligned in azimuth to the geographical north without the need of a dedicated costly calibration flight.

In addition, based on the additional information received and processed by the stand-by TR/RX channel the invention allows performing an independent long term online monitoring of the detection quality of the active TR/RX channel both in range and azimuth, thereby adding a supplementary operational safety feature.

Similarly, the invention allows performing an independent long term online monitoring of the detection quality of the collocated PSR both in range and azimuth, thereby adding another supplementary operational safety feature.

In case the rotating antenna of the MSSR is not operational because of maintenance or failure, the stand-by TR/RX channel of the MSSR can still receive, process and provide the information derived from the unsolicited squittered transmissions sent spontaneously by a transponder without active interrogation.

### Short description of the drawings

The invention may be more fully understood by the following more detailed description with corresponding figures wherein:
- Fig. 1: shows the standard architecture of a dual redundant MSSR according to prior art,

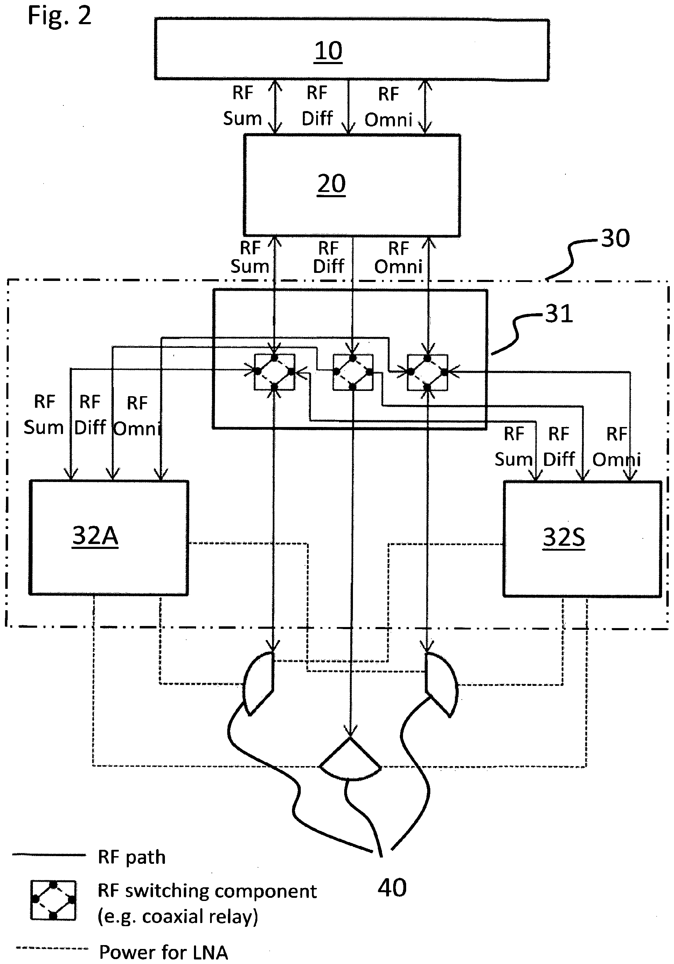

- Fig. 2: shows the architecture of a dual redundant MSSR according to the invention,

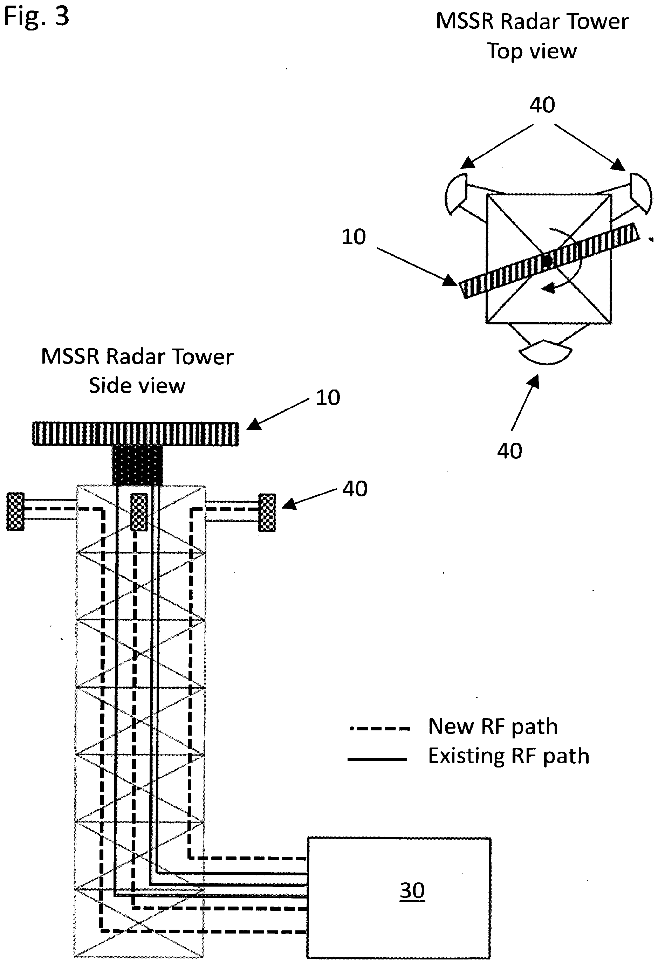

- Fig. 3: shows an example for the arrangement of the various antennas of the MSSR at an antenna tower according to the invention,

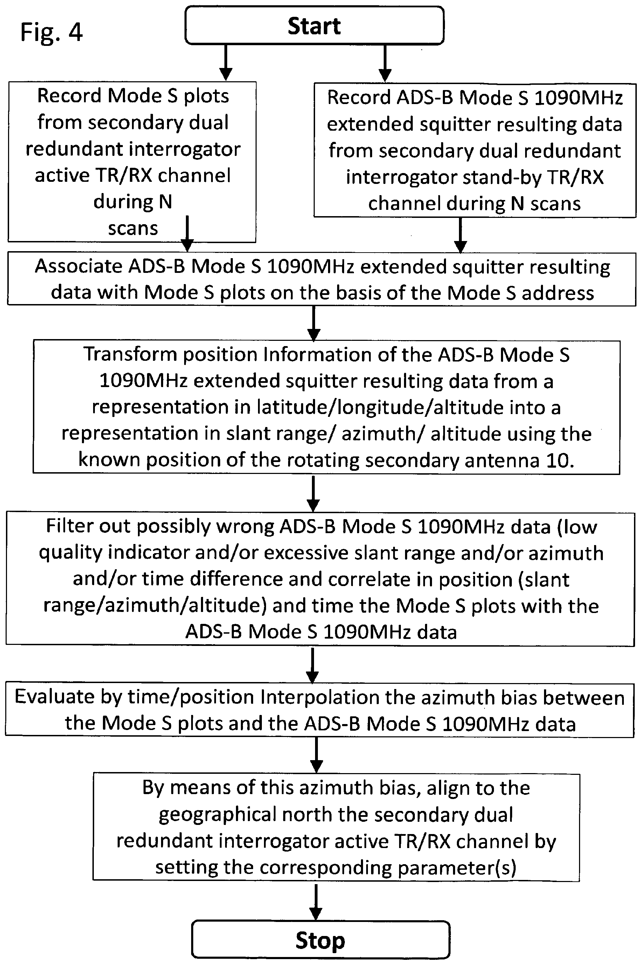

- Fig. 4: shows a flow chart to use the MSSR according to the invention in order to evaluate the azimuth bias and to align correspondingly the active TR/RX channel to the geographic north based upon the correlation of the Mode S plots generated by the active TR/RX channel through interrogation/reply cycles with the ADS-B Mode S 1090MHz extended squitter resulting data generated by the stand-by TR/RX channel,

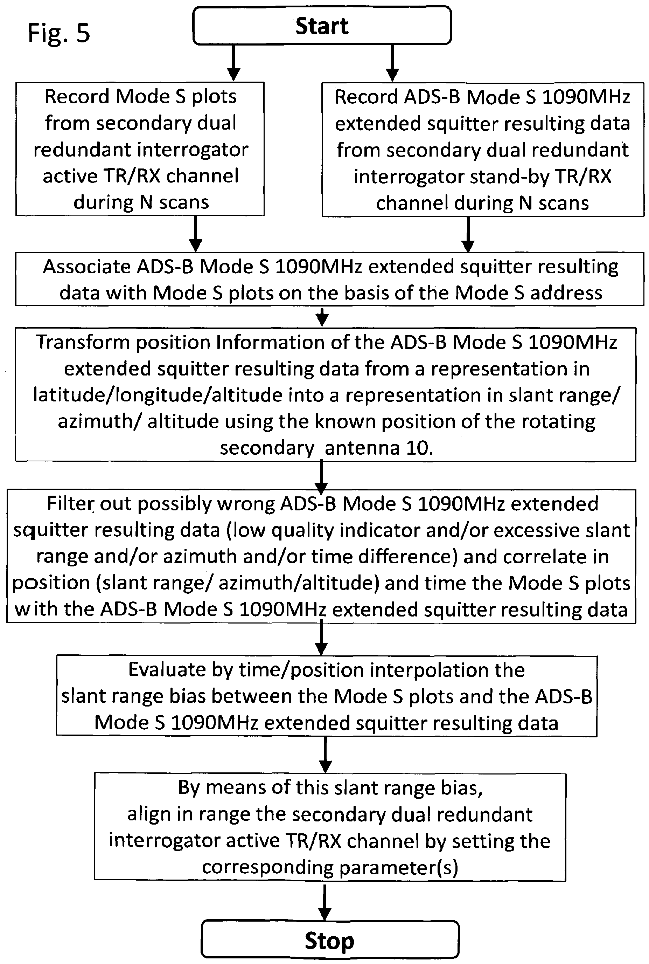

- Fig. 5: shows a flow chart to use the MSSR according to the invention in order to evaluate the slant range bias and to align correspondingly the active TR/RX channel in range based upon the correlation of the Mode S plots generated by the active TR/RX channel through interrogation/reply cycles with the ADS-B Mode S 1090MHz extended squitter resulting data generated by the standby TR/RX channel,

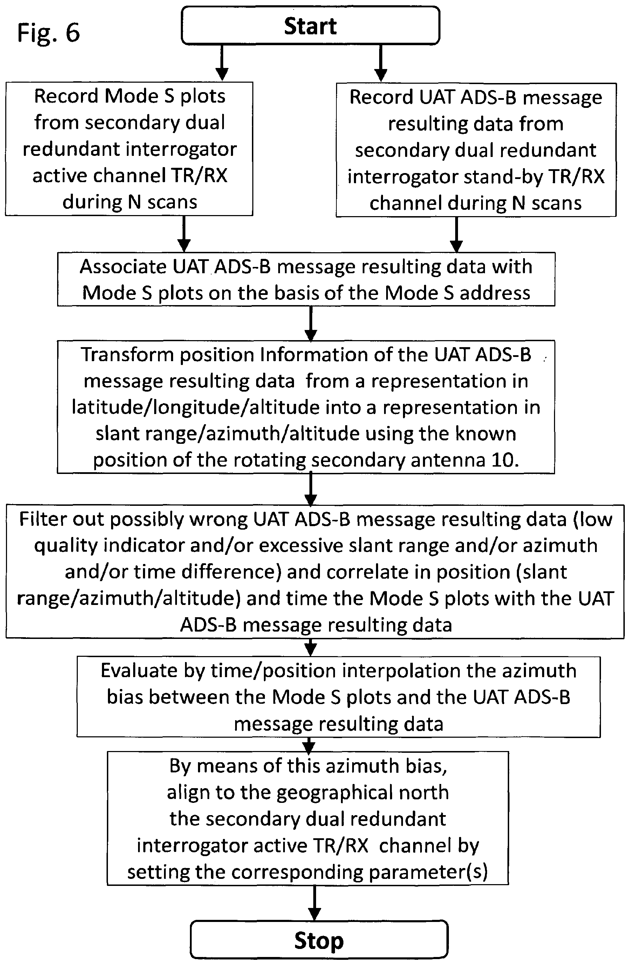

- Fig. 6: shows a flow chart to use the MSSR according to the invention in order to evaluate the azimuth bias and to align correspondingly the active TR/RX channel to the geographic north based upon the correlation of the Mode S plots generated by the active TR/RX channel through interrogation/reply cycles with the corresponding UAT ADS-B message resulting data generated by the stand-by TR/RX channel,

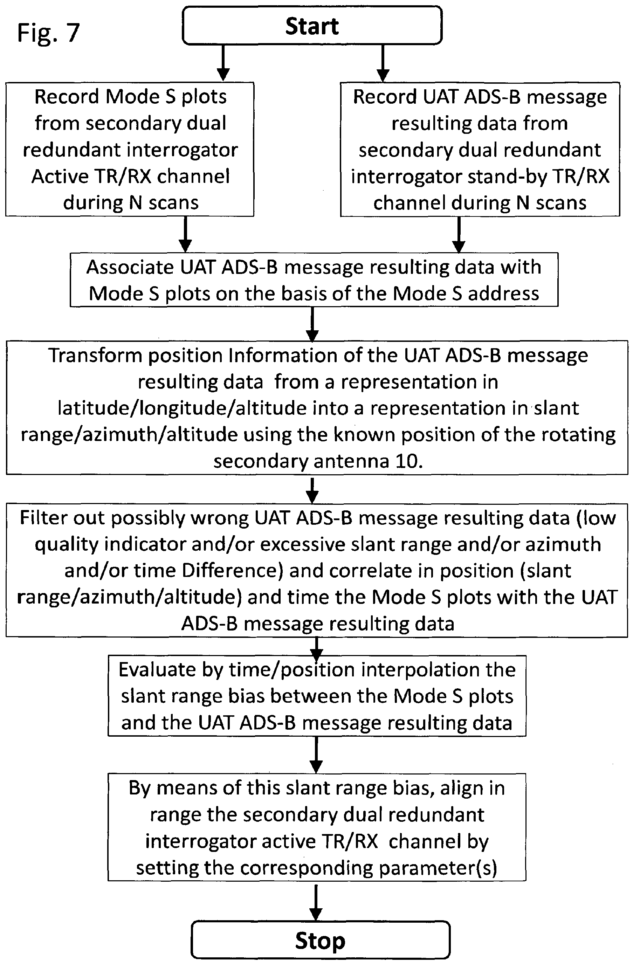

- Fig. 7: shows a flow chart to use the MSSR according to the invention in order to evaluate the slant range bias and to align correspondingly the active TR/RX channel in range based upon the correlation of the Mode S plots generated by the active TR/RX channel through interrogation/reply cycles with the UAT ADS-B message resulting data generated by the stand-by TR/RX channel,

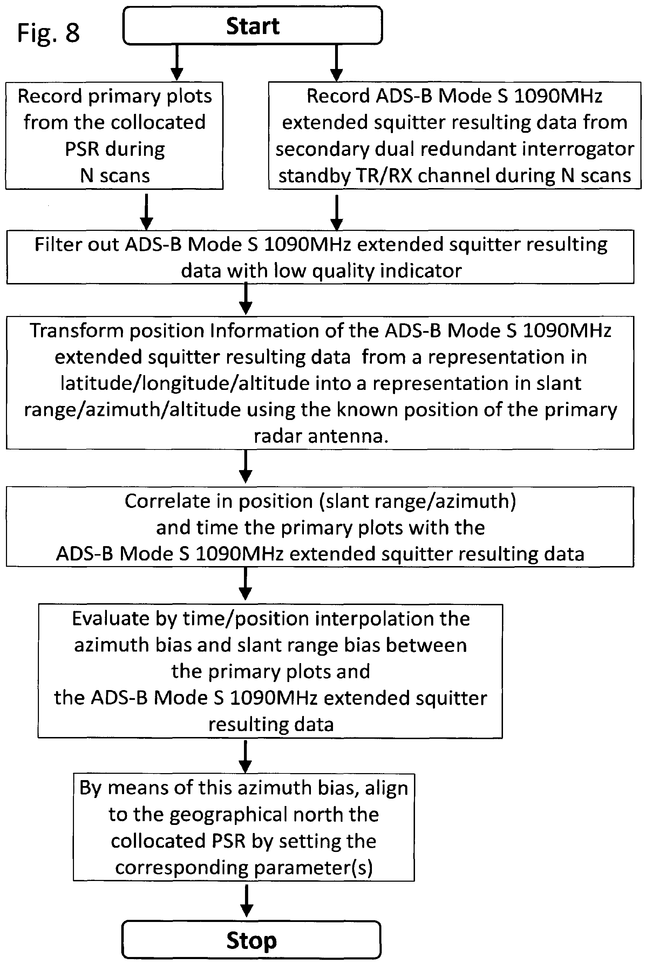

- Fig. 8: shows a flow chart to use the MSSR according to the invention in order to evaluate the azimuth bias and to align correspondingly the collocated PSR to the geographic north based upon the correlation of the primary plots generated by the collocated PSR with the ADS-B Mode S 1090MHz extended squitter resulting data generated by the stand-by TR/RX channel,

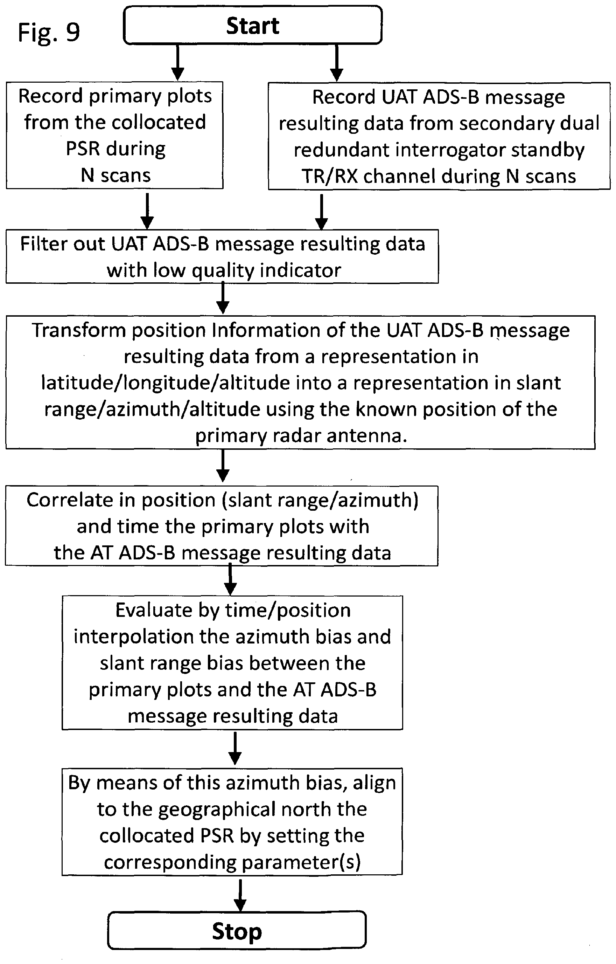

- Fig. 9: shows a flow chart to use the MSSR according to the invention in order to evaluate the azimuth bias and to align correspondingly the collocated PSR to the geographic north based upon the correlation of the primary plots generated by the collocated PSR with the UAT ADS-B message resulting data generated by the stand-by TR/RX channel,

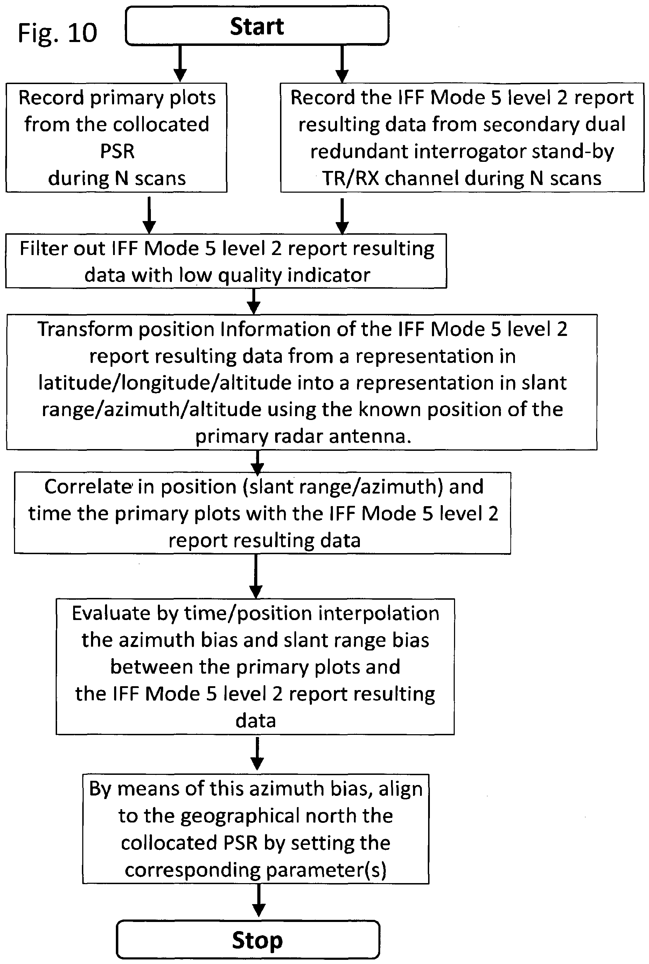

- Fig. 10: shows a flow chart to use the MSSR according to the invention in order to evaluate the azimuth bias and to align correspondingly the collocated PSR to the geographic north based upon the correlation of the primary plots generated by the collocated PSR with the IFF Mode 5 level 2 report resulting data generated by the stand-by TR/RX channel,

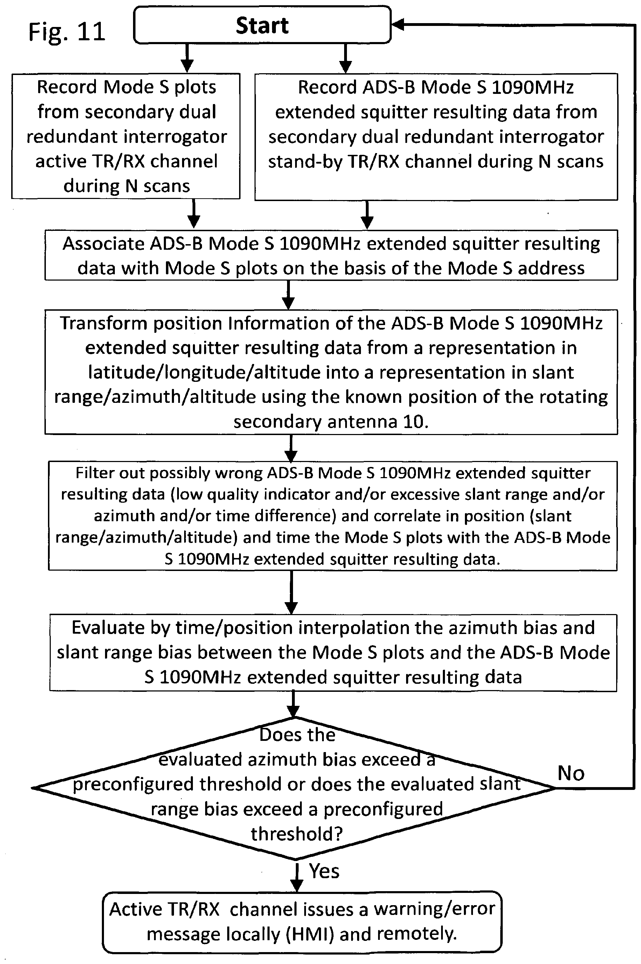

- Fig. 11: shows a flow chart to use the MSSR according to the invention in order to perform a long term online monitoring for the active TR/RX channel by permanently evaluating the azimuth and range biases between the Mode S plots generated by the active TR/RX channel through interrogation/reply cycles with the ADS-B Mode S 1090MHz extended squitter resulting data generated by the stand-by TR/RX channel based on the method described in Fig. 4 and 5,

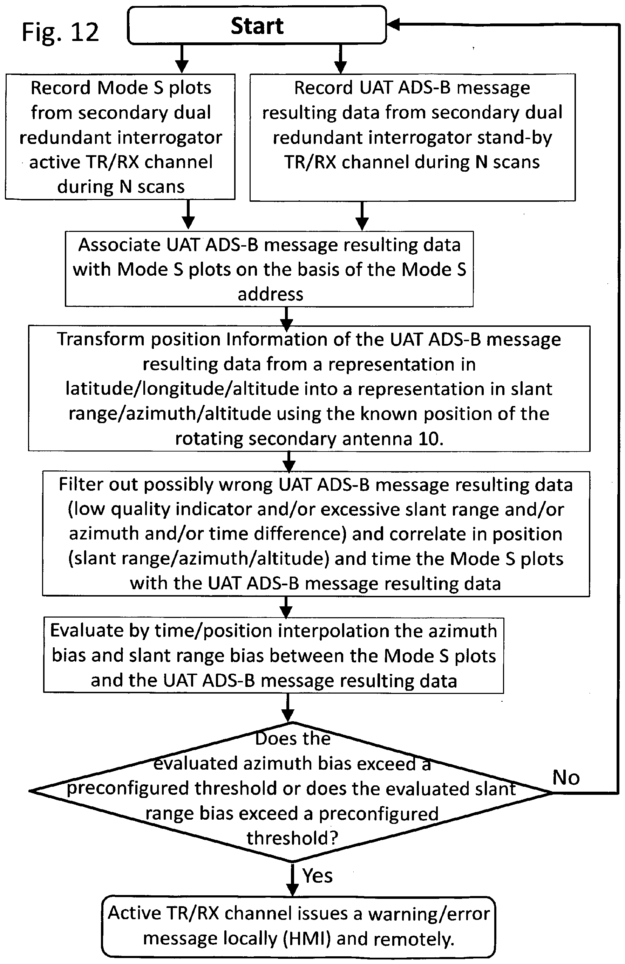

- Fig. 12: shows a flow chart to use the MSSR according to the invention in order to perform a long term online monitoring for the active TR/RX channel by permanently evaluating the azimuth and range biases between the Mode S plots generated the active TR/RX channel through interrogation/reply cycles with the UAT ADS-B message resulting data generated by the stand-by TR/RX channel based on the method described in Fig. 6 and 7,

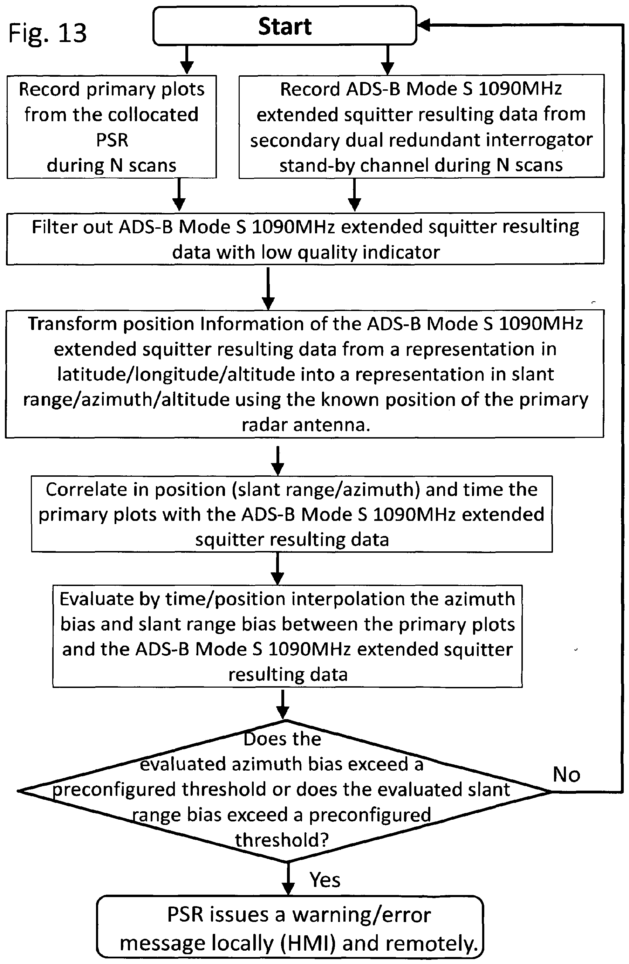

- Fig. 13: shows a flow chart to use the MSSR according to the invention in order to perform a long term online monitoring for the collocated PSR by permanently evaluating the azimuth and range biases between the primary plots generated by the PSR with the ADS-B Mode S 1090MHz extended squitter resulting data generated by the stand-by TR/RX channel based on the method described in Fig. 8,

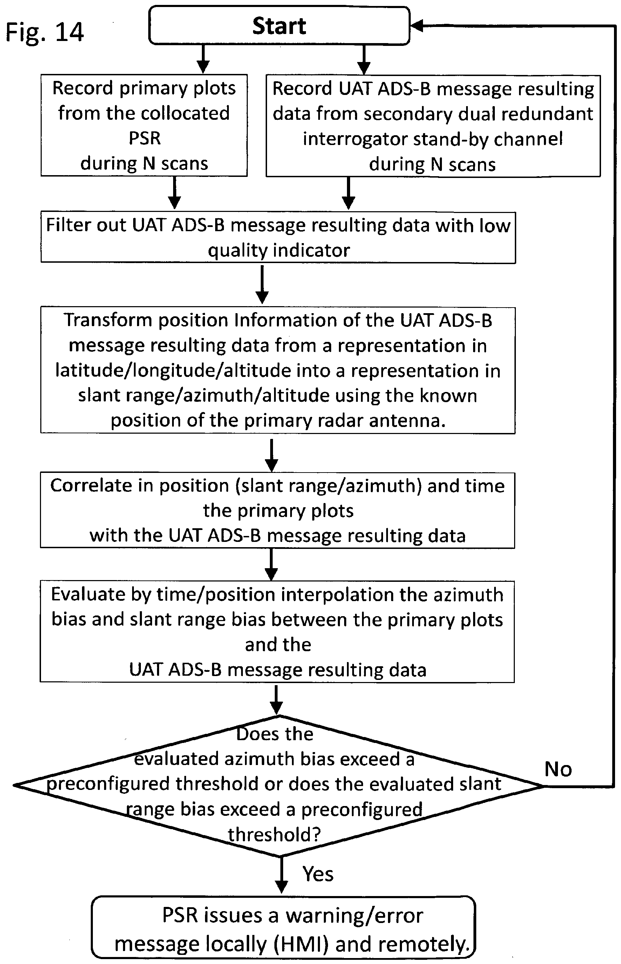

- Fig. 14: shows a flow chart to use the MSSR according to the invention in order to perform a long term online monitoring for the collocated PSR by permanently evaluating the azimuth and range biases between the primary plots generated by the PSR with the UAT ADS-B message resulting data generated by the stand-by TR/RX channel based on the method described in Fig. 9,

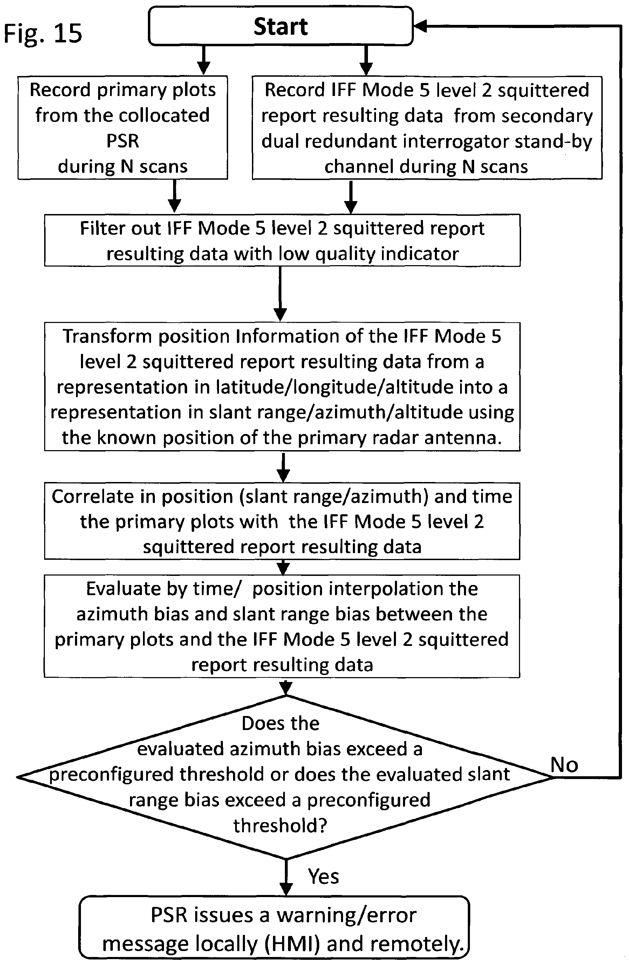

- Fig. 15: shows a flow chart to use the MSSR according to the invention in order to perform a long term online monitoring for the collocated PSR by permanently evaluating the azimuth and range biases between the primary plots generated by the PSR with the IFF Mode 5 level 2 squittered report resulting data generated by the stand-by TR/RX channel based on the method described in Fig. 10.

### Detailed Description of the Invention

In Fig. 1 the known architecture of a modern dual redundant MSSR and the corresponding RF signal paths are shown. The MSSR consists of a rotating secondary monopulse antenna 10 that is mounted on a pedestal 20 with rotary joint and any kind of drive unit for rotation of the antenna 10 thereby enabling the MSSR to cover the complete azimuth of 360 degrees. The antenna 10 is connected via three RF paths (sum, difference [diff], omnidirectional [omni]) to the secondary dual redundant interrogator 30, wherein the interrogator 30 comprises the changeover equipment 31 containing switching means e.g. circuits, switches, coaxial relays to connect one of the two redundant transmit/receiver TX/RX channels 32A, 32S to the rotating secondary monopulse antenna 10. The TR/RX channel currently connected with the rotating secondary monopulse antenna 10 is the active TX/RX channel 32A, the other channel is the stand-by TX/RX channel 32S. The active TR/RX channel transmits interrogation signals and receives and processes the corresponding replies of external (e.g. aircraft-based) transponders. The stand-by TR/RX channel 32S does not perform any task related to the active reception of aircraft replies and is connected to three dummy loads 33.

The MSSR according to the invention as depicted in Fig. 2 replaces the three RF dummy loads 33 by three identical fixed sectorised antennas 40. The stand-by TR/RX channel 32S of the secondary dual redundant interrogator 30 is connected through the three RF paths (sum, diff, omni) via the changeover equipment 31 to each of these sectorised antennas 40. As a result, unsolicited squittered transmissions, spontaneously sent by aircraft, in particular ADS-B Mode S 1090MHz extended squitters, IFF Mode 5 level 2 squittered reports and UAT ADS-B messages, can be received, while the active TR/RX channel 32A connected to the rotating secondary monopulse antenna 10 is still continuing its task of interrogating and receiving the corresponding replies of aircraft-based external transponders .

The three fixed sectorised antennas 40 are advantageously mounted 120° apart from each other in order to provide a 360 degree coverage in azimuth. For the installation of the fixed sectorised antennas preferably the existing mechanical infrastructure of the MSSR can be used. An example is shown in Fig. 3 showing side view and top view of a radar tower of a MSSR. At the top of the radar tower the rotating secondary monopulse antenna 10 is installed. The three fixed sectorised antennas 40 are mounted 120 degrees apart from each other at the same radar tower. For connecting the sectorised antennas 40 to the active TR/RX channel within the secondary dual redundant interrogator 30 new RF paths have to be installed as indicated by the dotted lines in Fig. 3.

If an optional primary surveillance radar (PSR) is used, the PSR antenna (not shown) can be installed on the same radar tower. In this case the PSR antenna and the rotating secondary monopulse antenna 10 are advantageously mounted on the same pedestal or turning gear rotating about the same axis. Such PSR is hereinforth called collocated with respect to the MSSR.

The RF path of each fixed sectorised antenna 40 may comprise a low noise amplifier. The low noise amplifiers may be placed between the changeover equipment 31 and the sectorised antennas 40. In a preferred embodiment the low noise amplifiers might be integrated within each of the sectorised antennas 40.

The power supply for the sectorised antennas 40 as well as for the low noise amplifiers can be provided by at least one of the active and stand-by TR/RX channels. In an advantageous embodiment the power supply can be provided by both active and stand-by TR/RX channels in order to provide redundancy.

The specific architecture explained above with respect to the MSSR according to the invention provides new opportunities of using the MSSR. Specifically, the invention allows the azimuth and slant range alignment of the active TR/RX channel 32A (as will be explained with reference to Figs. 4, 5, 6 and 7).

If a collocated PSR is present, a similar alignment in azimuth for the PSR can be performed (as will be explained with reference to Figs. 8, 9, 10).

Furthermore, a long term online monitoring can be implemented in order to verify at regular time intervals (every N scans) possible excessive azimuth or range deviations of the active TR/RX channel 32A (as will be explained with reference to Figs. 11 and 12) and for the collocated PSR (as will be explained with reference to Figs.13, 14 and 15) which could be critical in terms of operational safety.

Figs. 4/6 describe methods to use the MSSR according to the invention in order to evaluate the azimuth bias and to align correspondingly the active TR/RX channel 32A to the geographic north based upon the correlation of the Mode S plots, generated by the active TR/RX channel 32A through interrogation/reply cycles, with the ADS-B Mode S 1090MHz extended squitter resulting data (Fig. 4) or alternatively with UAT ADS-B message resulting data (Fig. 6) generated in each case by the stand-by TR/RX channel 32S.

These methods to use the MSSR comprise the following steps:
1) Record Mode S plots from the active TR/RX channel 32A during N scans. In addition, record ADS-B Mode S 1090MHz extended squitter resulting data / UAT ADS-B message resulting data from stand-by TR/RX channel 32S during N scans.
2) Associate ADS-B Mode S 1090MHz extended squitter resulting data / UAT ADS-B message resulting data with Mode S plots on the basis of the Mode S address (also called ICAO 24-bit address).
3) Transform position Information of the ADS-B Mode S 1090MHz extended squitter resulting data / UAT ADS-B message resulting data from a representation in latitude/longitude/altitude into a representation in slant range/ azimuth/ altitude using the known position of the rotating secondary antenna 10.
4) Filter out possibly wrong ADS-B Mode S 1090MHz extended squitter resulting data / UAT ADS-B message resulting data (low quality indicator and/or excessive slant range and/or azimuth and/or time difference) and correlate in position (slant range/azimuth/altitude) and time the Mode S plots with the ADS-B Mode S 1090MHz extended squitter resulting data / UAT ADS-B message resulting data.
5) Evaluate by time/position interpolation the azimuth bias between the Mode S plots and the ADS-B Mode S 1090MHz extended squitter resulting data / UAT ADS-B message resulting data.
6) By means of this azimuth bias, align to the geographical north the active TR/RX channel 32A by setting the corresponding parameter(s).

Two further methods to use the MSSR are described in Figs. 5 and 7. There, the method steps to evaluate the slant range bias and to align correspondingly the active TR/RX channel 32A in range based upon the correlation of the Mode S plots generated by the active TR/RX channel 32A through interrogation/reply cycles with the ADS-B Mode S 1090MHz extended squitter resulting data (Fig. 5) or UAT ADS-B message resulting data (Fig. 7), in each case generated by the stand-by TR/RX channel 32S, are shown:
1) Record Mode S plots from the active TR/RX channel 32A during N scans and record ADS-B Mode S 1090MHz extended squitter resulting data / UAT ADS-B message resulting data from the stand-by TR/RX channel 32S during N scans..
2) Associate ADS-B Mode S 1090MHz extended squitter resulting data / UAT ADS-B message resulting data with Mode S plots on the basis of the Mode S address.
3) Transform position Information of the ADS-B Mode S 1090MHz extended squitter resulting data / UAT ADS-B message resulting data from a representation in latitude/longitude/altitude into a representation in slant range/ azimuth/ altitude using the known position of the rotating secondary antenna 10.
4) Filter out possibly wrong ADS-B Mode S 1090MHz extended squitter resulting data / UAT ADS-B message resulting data (low quality indicator and/or excessive slant range and/or azimuth and/or time difference) and correlate in position (slant range/azimuth/altitude) and time the Mode S plots with the ADS-B Mode S 1090MHz extended squitter resulting data / UAT ADS-B message resulting data.
5) Evaluate by time/position interpolation the slant range bias between the Mode S plots and the ADS-B Mode S 1090MHz extended squitter resulting data / UAT ADS-B message resulting data.
6) By means of this slant range bias, align in range the active TR/RX channel 32A by setting the corresponding parameter(s)

Figs. 8/9/10 describe further methods to use the MSSR according to the invention in order to evaluate the azimuth bias and to align correspondingly a collocated PSR to the geographic north based upon the correlation of the primary plots generated by the collocated PSR with the ADS-B Mode S 1090MHz extended squitter resulting data (Fig. 8) / UAT ADS-B message resulting data (Fig. 9) / IFF Mode 5 level 2 report resulting data (Fig. 10), in each case generated by the stand-by TR/RX channel 32S, comprising the steps of:
1) Record primary plots from the collocated PSR during N scans and record ADS-B Mode S 1090MHz extended squitter resulting data / UAT ADS-B message resulting data / IFF Mode 5 level 2 report resulting data from stand-by TR/RX channel 32S during N scans.
2) Filter out ADS-B Mode S 1090MHz extended squitter resulting data / UAT ADS-B message resulting data / IFF Mode 5 level 2 report resulting data with low quality indicator.
3) Transform position Information of the ADS-B Mode S 1090MHz extended squitter resulting data / UAT ADS-B message resulting data / IFF Mode 5 level 2 report resulting data from a representation in latitude/longitude/altitude into a representation in slant range/azimuth/altitude using the known position of the primary radar antenna 10.
4) Correlate in position (slant range/azimuth) and time the primary plots with the ADS-B Mode S 1090MHz extended squitter resulting data / UAT ADS-B message resulting data / IFF Mode 5 level 2 report resulting data.
5) Evaluate by time/position interpolation the azimuth bias and slant range bias between the primary plots and the ADS-B Mode S 1090MHz extended squitter resulting data / UAT ADS-B message resulting data / IFF Mode 5 level 2 report resulting data.
6) By means of this azimuth bias, align to the geographical north the collocated PSR by setting the corresponding parameter(s).

Advantageously, a long term online monitoring for the active TR/RX channel 32A can be performed by permanently evaluating azimuth and range bias between the Mode S plots generated by the active TR/RX channel 32A through interrogation/reply cycles either with the ADS-B Mode S 1090MHz extended squitter resulting data (Fig. 11) or with UAT ADS-B message resulting data (Fig. 12), generated in each case by the stand-by TR/RX channel 32S. Accordingly, the following steps are performed:
1) Record Mode S plots from active TR/RX channel 32A during N scans and record ADS-B Mode S 1090MHz extended squitter resulting data / UAT ADS-B message resulting data from stand-by TR/RX channel 32S during N scans.
2) Associate ADS-B Mode S 1090MHz extended squitter resulting data / UAT ADS-B message resulting data with Mode S plots on the basis of the Mode S address.
3) Transform position Information of the ADS-B Mode S 1090MHz extended squitter resulting data / UAT ADS-B message resulting data from a representation in latitude/longitude/altitude into a representation in slant range/azimuth/ altitude using the known position of the rotating secondary antenna 10.
4) Filter out possibly wrong ADS-B Mode S 1090MHz extended squitter resulting data / UAT ADS-B message resulting data (low quality indicator and/or excessive slant range and/or azimuth and/or time difference) and correlate in position (slant range/azimuth/altitude) and time the Mode S plots with the ADS-B Mode S 1090MHz extended squitter resulting data / UAT ADS-B message resulting data.
5) Evaluate by time/position interpolation the azimuth bias and slant range bias between the Mode S plots and the ADS-B Mode S 1090MHz extended squitter resulting data / UAT ADS-B message resulting data.
6) Check if the evaluated azimuth bias exceeds a preconfigured threshold or does the evaluated slant range bias exceed a preconfigured threshold?
7) If the threshold is below the threshold continue with step 1, if the threshold is exceeded continue with step 8.
8) Active TR/RX channel 32A issues a warning/error message locally (via an HMI) and remotely.

Figs. 13/14/15 describe methods to perform a long term online monitoring for a collocated PSR by permanently evaluating azimuth and range bias between the primary plots generated by the PSR with the ADS-B Mode S 1090MHz extended squitter (Fig. 13) or UATS ADS-B message resulting data (Fig. 14) resulting data or IFF Mode 5 level 2 squittered report resulting data, generated in each case by the stand-by TR/RX channel 32S. The long term online monitoring comprises the steps of:
1) Record primary plots from the collocated PSR during N scans and record ADS-B Mode S 1090MHz extended squitter resulting data / UAT ADS-B message resulting data / IFF Mode 5 level 2 squittered report resulting data from the stand-by TR/RX channel 32S during N scans.
2) Filter out ADS-B Mode S 1090MHz extended squitter resulting data / UAT ADS-B message resulting data / IFF Mode 5 level 2 squittered report resulting data with low quality indicator.
3) Transform position Information of the ADS-B Mode S 1090MHz extended squitter resulting data / UAT ADS-B message resulting data / IFF Mode 5 level 2 report resulting data from a representation in latitude/longitude/altitude into a representation of slant range/ azimuth/ altitude using the known position of the primary radar antenna.
4) Correlate in position (slant range/azimuth) and time the primary plots with the ADS-B Mode S 1090MHz extended squitter resulting data / UAT ADS-B message resulting data / IFF Mode 5 level 2 report resulting data.
5) Evaluate by time/position interpolation the azimuth bias and slant range bias between the primary plots and the ADS-B Mode S 1090MHz extended squitter resulting data / UAT ADS-B message resulting data / IFF Mode 5 level 2 report resulting data.
6) Check if the evaluated azimuth bias exceeds a preconfigured threshold or does the evaluated slant range bias exceed a preconfigured threshold?
7) If the threshold is below the threshold continue with step 1 if the threshold is exceeded continue with step 8.
8) Active TR/RX channel 32A issues a warning/error message locally (HMI) and remotely.

**List of Abbreviations**

| **Abbreviation** | **Meaning** |
|---|---|
| ADS-B | Automatic Dependent Surveillance Broadcast |
| ATC | Air Traffic Control |
| Diff | Difference |
| FFM | Far Field Monitor |
| GA | General Aviation |
| GNSS | Global Navigation Satellite System |
| ICAO | International Civil Aviation Organisation |
| HMI | Human Machine Interface |
| IFF | Identification Friend or Foe |
| LNA | Low Noise Amplifier |
| MSSR | Monopulse Secondary Surveillance Radar |
| PSR | Primary Surveillance Radar |
| RF | Radio Frequency |
| RX | Receiver |
| SLS | Side Lobe Suppression |
| SSR | Secondary Surveillance Radar |
| TX | Transmitter |
| UAT | Universal Access Transceiver |
| WGS | World Geodetic System |

## Claims

1. Monopulse secondary surveillance radar comprising:
- a rotating antenna (10) for transmitting interrogations and receiving corresponding replies from external transponders,
- a dual redundant interrogator (30) comprising two parallel TR/RX channels (32A,32S), each TR/RX channel comprising a transmitter and a receiver,
- a changeover equipment, the status of which defines which one of the two TR/RX channels acts as the active (32A) or as the stand-by TR/RX channel (32S) by connecting the rotating antenna (10) with the active TR/RX channel (32A),
**characterized in that** the monopulse secondary surveillance radar further comprises a plurality of fixed sectorised antennas (40) that together are capable to cover the complete azimuth of 360°, and that the stand-by TR/RX channel (32S) can be switchably connected to the fixed sectorised antennas (40), and that the stand-by TR/RX channel (32S) is capable to receive and process unsolicited squittered transmissions from aviation radio systems received via the sectorised antennas (40).

2. Monopulse secondary surveillance radar according to claim 1, **characterized in that** it comprises three sectorised antennas (40), each mounted 120° apart from each other.

3. Monopulse secondary surveillance radar according to one of the preceding claims, **characterized in that** the stand-by channel (32S) is capable to receive and process at least one of the following types of unsolicited squittered transmissions: ADS-B Mode S 1090 MHz extended squitters, IFF Mode 5 Level 2 squittered reports, UAT ADS-B messages via the sectorised antennas (40).

4. Monopulse secondary surveillance radar according to one of the preceding claims, **characterized in that** the RF paths, connecting each sectorised antenna (40) with the stand-by TR/RX channel (32S), each comprise a low noise amplifier.

5. Monopulse secondary surveillance radar according to claim 4, **characterized in that** the low noise amplifiers are integrated in each of the sectorised antennas (40).

6. Monopulse secondary surveillance radar according to one of the preceding claims 4 or 5, **characterized in that** the low noise amplifiers are powered by the stand-by TR/RX channel (32S) and/or the active TR/RX channel (32A) of the dual redundant interrogator (30).

7. Method to use the monopulse secondary surveillance radar according to one of the preceding claims, performing the steps of:
- record Mode S plots by the active TR/RX channel,
- record ADS-B Mode S 1090MHz extended squitter resulting data or UAT ADS-B message resulting data by the stand-by TR/RX channel (32S),
- correlate said Mode S plots and said data in order to evaluate the azimuth bias of the active TR/RX channel (32A) and to align the active TR/RX channel (32A) to the geographic north.

8. Method to use the monopulse secondary surveillance radar according to claim 1 to 6, performing the steps of:
- record Mode S plots by the active TR/RX channel (32A),
- record ADS-B Mode S 1090MHz extended squitter resulting data or UAT ADS-B message resulting data by the stand-by TR/RX channel,
- correlate said Mode S plots and said data in order to evaluate the slant range bias of the active TR/RX channel (32A) and to align in range the active TR/RX channel (32A).

9. Method to use the monopulse secondary surveillance radar according to one of the claims 1 to 6, performing the steps of:
- record ADS-B Mode S 1090MHz extended squitter resulting data or UAT ADS-B message resulting data or IFF Mode 5 level 2 report resulting data by the stand-by TR/RX channel (32S);
- record primary plots by a primary surveillance radar collocated to the monopulse secondary surveillance radar;
- correlate said data and said primary plots in order to evaluate the azimuth bias of the primary surveillance radar and to align the primary surveillance radar to the geographic north.

10. Method to use the monopulse secondary surveillance radar according to one of the claims 1 to 6, performing the steps of:
- record Mode S plots by the active TR/RX channel (32A),
- record ADS-B Mode S 1090MHz extended squitter resulting data or UAT ADS-B messages resulting data by the stand-by TR/RX channel (32S),
- correlate said Mode S plots and said data in order to evaluate the azimuth bias and/or the slant range bias of the active TR/RX channel,
- issue a warning message if the azimuth bias and/or the slant range bias of the active TR/RX channel (32A) exceed a predefined threshold.

11. Method to use the monopulse secondary surveillance radar according to one of the claims 1 to 6, performing the steps of:
- record ADS-B Mode S 1090MHz extended squitter resulting data or UAT ADS-B message resulting data or IFF Mode 5 level 2 report resulting data by the stand-by TR/RX channel (32S);
- record primary plots by a primary surveillance radar collocated to the monopulse secondary surveillance radar;
- correlate said data and said primary plots in order to evaluate the azimuth bias and/or the slant range bias of the primary surveillance radar;
- issue a warning message if the azimuth bias and/or the slant range bias of the primary surveillance radar exceed a predefined threshold.

## Patentansprüche

1. Sekundäres Monopuls-Überwachungsradar, umfassend:
- eine sich drehende Antenne (10) zum Senden von Abfragen und zum Empfangen von entsprechenden Antworten von externen Transpondern,
- eine duale redundante Abfrageeinrichtung (30) mit zwei parallelen TR/RX-Kanälen (32A,32S), wobei jeder TR/RX-Kanal einen Sender und einen Empfänger aufweist,
- eine Umschalteinrichtung, deren Status festlegt, welcher der beiden TR/RX-Kanäle als aktiver (32A) oder als Bereitschafts-TR/RX-Kanal (32S) fungiert, indem die sich drehende Antenne (10) mit dem aktiven TR/RX-Kanal (32A) verbunden wird,
**dadurch gekennzeichnet, dass** das sekundäre Monopuls-Überwachungsradar ferner mehrere ortsfeste sektorisierte Antennen (40) umfasst, die zusammen den gesamten Azimut von 360° abdecken können, und dass der Bereitschafts-TR/RX-Kanal (32S) schaltbar mit den ortsfesten sektorisierten Antennen (40) verbunden werden kann und dass der Bereitschafts-TR/RX-Kanal (32S) in der Lage ist, unerwünschte Squitter-Übertragungen von über die sektorisierten Antennen (40) empfangenen Flugfunksystemen zu empfangen und zu verarbeiten.

2. Sekundäres Monopuls-Überwachungsradar nach Anspruch 1, **dadurch gekennzeichnet, dass** es drei sektorisierte Antennen (40) umfasst, welche jeweils um 120° voneinander entfernt angeordnet sind.

3. Sekundäres Monopuls-Überwachungsradar nach einem der vorangehenden Ansprüche, **dadurch gekennzeichnet, dass** der Bereitschaftskanal (32S) fähig ist, mindestens eine der folgenden Arten von unaufgeforderten Squitter-Übertragungen zu empfangen und zu verarbeiten: ADS-B-Modus S 1090 MHz Extended Squitter, IFF-Modus 5 Level 2-Squitter-Reports, UAT-ADS-B-Nachrichten über die sektorisierten Antennen (40).

4. Sekundäres Monopuls-Überwachungsradar nach einem der vorangehenden Ansprüche, **dadurch gekennzeichnet, dass** die HF-Pfade, die jede sektorisierte Antenne (40) mit dem Bereitschafts-TR/RX-Kanal (32S) verbinden, jeweils einen rauscharmen Verstärker aufweisen.

5. Sekundäres Monopuls-Überwachungsradar nach Anspruch 4, **dadurch gekennzeichnet, dass** die rauscharmen Verstärker in jeder der sektorisierten Antennen (40) integriert sind.

6. Sekundäres Monopuls-Überwachungsradar nach einem der vorangehenden Ansprüche 4 oder 5, **dadurch gekennzeichnet, dass** die rauscharmen Verstärker von dem Bereitschafts-TR/RX-Kanal (32S) und/oder von dem aktiven TR/RX-Kanal (32A) der dualen redundanten Abfrageeinrichtung (30) angetrieben werden.

7. Verfahren zur Verwendung des sekundären Monopuls-Überwachungsradars nach einem der vorangehenden Ansprüche, wobei die folgenden Schritte ausgeführt werden:
- Aufzeichnen von Modus S-Plots durch den aktiven TR/RX-Kanal,
- Aufzeichnen von ADS-B-Modus S 1090 MHz Extended Squitter-Ergebnisdaten oder UAT-ADS-B-Nachrichtenergebnisdaten durch den Bereitschafts-TR/RX-Kanal (32S),
- Korrelieren der Modus S-Plots und der Daten zum Bewerten des Azimut-Bias des aktiven TR/RX-Kanals (32A) und zum Ausrichten des aktiven TR/RX-Kanals (32A) mit dem geographischen Norden.

8. Verfahren zur Verwendung des sekundären Monopuls-Überwachungsradars nach Anspruch 1 bis 6, wobei die folgenden Schritte ausgeführt werden:
- Aufzeichnen von Modus S-Plots durch den aktiven TR/RX-Kanal (32A),
- Aufzeichnen von ADS-B-Modus S 1090 MHz Extended Squitter-Ergebnisdaten oder UAT-ADS-B-Nachrichtenergebnisdaten durch den Bereitschafts-TR/RX-Kanal,
- Korrelieren der Modus S-Plots und der Daten zum Bewerten des Schrägentfernungs-Bias des aktiven TR/RX-Kanals (32A) und zum Ausrichten der Entfernung des aktiven TR/RX-Kanals (32A).

9. Verfahren zur Verwendung des sekundären Monopuls-Überwachungsradars nach einem der Ansprüche 1 bis 6, wobei die folgenden Schritte ausgeführt werden:
- Aufzeichnen von ADS-B-Modus S 1090 MHz Extended Squitter-Ergebnisdaten oder UAT-ADS-B-Nachrichtenergebnisdaten oder IFF-Modus 5 Level 2 Report-Ergebnisdaten durch den Bereitschafts-TR/RX-Kanal (32S);
- Aufzeichnen von primären Plots durch ein primäres Überwachungsradar, welches dem sekundären Monopuls-Überwachungsradar zugeordnet ist;
- Korrelieren der Daten und der primären Plots zum Bewerten des Azimut-Bias des primären Überwachungsradars und zum Ausrichten des primären Überwachungsradars mit dem geographischen Norden.

10. Verfahren zur Verwendung des sekundären Monopuls-Überwachungsradars nach einem der Ansprüche 1 bis 6, wobei die folgenden Schritte ausgeführt werden:
- Aufzeichnen von Modus S-Plots durch den aktiven TR/RX-Kanal (32A),
- Aufzeichnen von ADS-B-Modus S 1090 MHz Extended Squitter-Ergebnisdaten oder UAT-ADS-B-Nachrichtenergebnisdaten durch den Bereitschafts-TR/RX-Kanal (32S);
- Korrelieren der Modus-S-Plots und der Daten zum Bewerten des Azimut-Bias und/oder des Schrägentfernungs-Bias des aktiven TR/RX-Kanals,
- Ausgeben einer Warnmeldung, wenn der Azimut-Bias und/oder der Schrägentfernungs-Bias des aktiven TR/RX-Kanals (32A) einen vordefinierten Schwellenwert überschreiten.

11. Verfahren zur Verwendung des sekundären Monopuls-Überwachungsradars nach einem der Ansprüche 1 bis 6, wobei die folgenden Schritte ausgeführt werden:
Aufzeichnen von ADS-B-Modus S 1090 MHz Extended Squitter-Ergebnisdaten oder UAT-ADS-B-Nachrichtenergebnisdaten oder IFF-Modus 5 Level 2 Report-Ergebnisdaten durch den Bereitschafts-TR/RX-Kanal (32S);
- Aufzeichnen von primären Plots durch ein primäres Überwachungsradar, welches dem sekundären Monopuls-Überwachungsradar zugeordnet ist;
- Korrelieren der Daten und der primären Plots zum Bewerten des Azimut-Bias und/oder des Schrägentfernungs-Bias des primären Überwachungsradars;
- Ausgeben einer Warnmeldung, wenn der Azimut-Bias und/oder der Schrägentfernungs-Bias des primären Überwachungsradars einen vordefinierten Schwellenwert überschreiten.

## Revendications

1. Radar secondaire de surveillance monopulse comprenant :
- une antenne tournante (10) pour transmettre des requêtes et recevoir des réponses correspondantes des transpondeurs externes,
- un interrogateur à double redondance (30) comprenant deux canaux TR/RX parallèles (32A, 32S), chaque canal TR/RX comprenant un émetteur et un récepteur,
- un équipement de commutation dont le statut définit lequel des deux canaux TR/RX sert de canal actif (32A) ou de canal TR/RX en veille (32S) en reliant l'antenne tournante (10) au canal TR/RX actif (32A),
**caractérisé en ce que** le radar secondaire de surveillance monopulse comprend en outre une pluralité d'antennes sectorielles fixes (40) qui sont ensemble capables de couvrir l'azimut complet de 360° et que le canal TR/RX en veille (32S) peut être connecté de manière commutable aux antennes sectorielles fixes (40) et que le canal TR/RX en veille (32S) est capable de recevoir et de traiter des transmissions non sollicitées émises par des systèmes de radiocommunication aéronautique reçues via les antennes sectorielles (40).

2. Radar secondaire de surveillance monopulse selon la revendication 1, **caractérisé en ce qu'**il comporte trois antennes sectorielles (40), chacune montée à 120° l'une de l'autre.

3. Radar secondaire de surveillance monopulse selon l'une des revendications précédentes, **caractérisé en ce que** le canal en veille (32S) est capable de recevoir et de traiter au moins l'un des types suivants d'émissions à squitter non souhaitées émises : squitters étendus ADS-B mode S 1 090 MHz, rapports à squitters IFF mode 5 de niveau 2, messages UAT ADS-B envoyés via les antennes sectorielles (40).

4. Radar secondaire de surveillance monopulse selon l'une des revendications précédentes, **caractérisé en ce que** les voies RF, reliant chaque antenne sectorielle (40) au canal TR/RX en veille (32S), comportent chacune un amplificateur à faible bruit.

5. Radar secondaire de surveillance monopulse selon la revendication 4, **caractérisé en ce que** les amplificateurs à faible bruit sont intégrés dans chacune des antennes sectorielles (40).

6. Radar secondaire de surveillance monopulse selon l'une des revendications précédentes 4 ou **caractérisé en ce que** les amplificateurs à faible bruit sont alimentés par le canal TR/RX en veille (32S) et/ou par le canal TR/RX actif (32A) de l'interrogateur à double redondance (30).

7. Méthode d'utilisation du radar secondaire de surveillance monopulse selon l'une des revendications précédentes consistant à :
- enregistrer des tracés en mode S au moyen du canal TR/RX actif,
- enregistrer les données résultant du squitter étendu ADS-B mode S 1 090 MHz ou les données résultant du message UAT ADS-B au moyen du canal TR/RX en veille (32S),
- corréler lesdits tracés du mode S et lesdites données afin d'évaluer le biais en azimut du canal TR/RX actif (32A) et d'aligner le canal TR/RX actif (32A) sur le nord géographique.

8. Méthode d'utilisation du radar secondaire de surveillance monopulse selon les revendications 1 à 6, consistant à :
- enregistrer des tracés en mode S au moyen du canal TR/RX actif (32A),
- enregistrer les données résultant du squitter étendu ADS-B mode S 1 090 MHz ou les données résultant du message UAT ADS-B au moyen du canal TR/RX en veille,
- corréler lesdits tracés en mode S et lesdites données afin d'évaluer le biais oblique de la plage du canal TR/RX actif (32A) et d'aligner la plage du canal TR/RX actif (32A).

9. Méthode d'utilisation du radar secondaire de surveillance monopulse selon l'une des revendications 1 à 6, consistant à :
- enregistrer les données résultant du squitter étendu ADS-B mode S 1 090 MHz ou les données résultant du message UAT ADS-B ou les données résultant du rapport IFF mode 5 niveau 2 au moyen du canal TR/RX en veille (32S),
- enregistrer les tracés principaux au moyen d'un radar principal de surveillance colocalisé au radar secondaire de surveillance monopulse,
- corréler lesdites données et les tracés principaux afin d'évaluer le biais en azimut du radar principal de surveillance et d'aligner le radar principal de surveillance sur le nord géographique.

10. Méthode d'utilisation du radar secondaire de surveillance monopulse selon l'une des revendications 1 à 6, consistant à :
- enregistrer des tracés en mode S au moyen du canal TR/RX actif (32A),
- enregistrer les données résultant du squitter étendu ADS-B mode S 1 090 MHz ou les données résultant des messages UAT ADS-B au moyen du canal TR/RX en veille (32S),
- corréler lesdits tracés en mode S et lesdites données afin d'évaluer le biais de l'azimut et/ou le biais oblique de la plage du canal TR/RX actif,
- émettre un message d'avertissement si le biais d'azimut et/ou le biais oblique de la plage du canal TR/RX actif (32A) dépassent un seuil prédéfini.

11. Méthode d'utilisation du radar secondaire de surveillance monopulse selon l'une des revendications 1 à 6, consistant à :
- enregistrer les données résultant du squitter étendu ADS-B mode S 1 090 MHz ou les données résultant du message UAT ADS-B ou les données résultant du rapport IFF mode 5 niveau 2 au moyen du canal TR/RX en veille (32S),
- enregistrer les tracés principaux au moyen d'un radar principal de surveillance colocalisé au radar secondaire de surveillance monopulse,
- corréler lesdites données et lesdits tracés principaux afin d'évaluer le biais d'azimut et/ou le biais oblique de la plage du radar principal de surveillance,
- émettre un message d'avertissement si le biais d'azimut et/ou le biais oblique de la plage du radar principal de surveillance dépassent un seuil prédéfini.
